(19) Europäisches Patentamt

European Patent Office

Office européen des brevets

(11) Veröffentlichungsnummer: **0 221 171**
**B1**

(12) **EUROPÄISCHE PATENTSCHRIFT**

(45) Veröffentlichungstag der Patentschrift: 01.08.90

(21) Anmeldenummer: 86903303.5

(22) Anmeldetag: 25.04.86

(86) Internationale Anmeldenummer:
PCT/EP86/00254

(87) Internationale Veröffentlichungsnummer:
WO 86/06294 06.11.86 Gazette 86/24

(51) Int. Cl.⁵: **B 01 D 67/00**, B 01 D 61/36,
C 08 J 7/18, C 08 F 259/08,
C 08 F 265/08, C 08 J 5/22

(54) DIE VERWENDUNG VON LÖSUNGS-DIFFUSIONSMEMBRANEN.

(30) Priorität: 26.04.85 DE 3515184

(43) Veröffentlichungstag der Anmeldung:
13.05.87 Patentblatt 87/20

(45) Bekanntmachung des Hinweises auf die
Patenterteilung:
01.08.90 Patentblatt 90/31

(84) Benannte Vertragsstaaten:
AT BE CH DE FR GB IT LI NL SE

(56) Entgegenhaltungen:
GB-A-1 351 188
GB-A-2 088 883
NL-C- 96 100

Die Akte enthält technische Angaben, die nach
dem Eingang der Anmeldung eingereicht
wurden und die nicht in dieser Patentschrift
enthalten sind.

(73) Patentinhaber: GFT Gesellschaft für
Trenntechnik mbH
Gerberstrasse 48
D-6650 Homburg/Saar (DE)

(72) Erfinder: GÖTZ, Bernd
Biberstr. 6
D-5030 Hürth (DE)
Erfinder: NIEMÖLLER, Axel
Hellenthaler Str. 20
D-5000 Köln 41 (DE)
Erfinder: SCHOLZ, Horst
Rheydter Str. 45
D-4048 Grevenbroich (DE)
Erfinder: DR. Ellinghorst, Guido
Lölsberg 102
D-5063 Overath (DE)
Erfinder: DR. Brüschke, Hartmut Ernst Artur
Kurpfalzstr. 64
D- 6907 Nussloch (DE)
Erfinder: Tusel, Günter
Lieselottenstr. 12
D-6650 Homburg/Saar (DE)

Courier Press, Leamington Spa, England.

**EP 0 221 171 B1**

56 Entgegenhaltungen:

Radiation Physics and Chemistry, Band 22, nr.
3-5 1983, Oxford,GB S.Ellinghorst et
al.:"Radiation initiated grafting of polymer
films-An alternative technique to prepare
membranes for various separation problems"
Seiten 635-642, siehe Seiten 635,636; Seite 638,
Zeile 19-Seite 642, letzte Zeile; Figuren 2,6-10;
Tabellen 1-3
Journal of Applied Polymer Science, Band 28,
Nr. 4, April 1983, New York(US) El-Sayed A.
Hegazy et al.:"The study on radiation grafting of
acrylic acid onto fluorine-containing
polymers.IV.Properties of membrane obtained
by Preirradiation grafting onto
polytetrafluoroethylene-hexafluoropropylene",
Seiten 1465-1479, siehe "Synopsis";Seite 1466,
Zeile 25 - Seite 1468, Zeile 10; Figur 1; Seite
1474, Zeile 45 - Seite 1476, Zeile 4
Ullmanns Encyclopädie der technischen Chemie
(1978), Band 16, Seiten 521,522
Membrantrennverfahren, Otto Salle
Verlag/Verlag Sauerländer(1981) Seite 27

74 Vertreter: Dost, Wolfgang, Dr.rer.nat.,Dipl.-
Chem. et al
Patent- & Rechtsanwälte Bardehle . Pagenberg .
Dost . Altenburg . Frohwitter . Geissler & Partner
Galileiplatz 1 Postfach 86 06 20
D-8000 München 86 (DE)

# EP 0 221 171 B1

**Beschreibung**

Die Erfindung betrifft die Verwendung von Lösungs-Diffusionsmembranen für die Pervaporation.

Die Herstellung derartiger Membranen ist bei N. D. Rozenblyum et al., Khim. Vys. Energ. 8 (1974) 339, I. Ishigaki et al., Radiat. Phys. Chem. 18 (1981) 899, Y. Haruvy, A. L. Rajbenbach, J. Appl. Polym. Sci. 26 (1981) 3065 and S. Shkolnik, D. Behar, J. Appl. Polym. Sci. 27 (1982) 2189 beschrieben. Hierbei erfolgt die Pfropfung von Polyethylen mit Acrylsäure, Styrol, Acrylnitril, 2,3-Epoxypropylacrylate, Na-Vinylsulfonat oder p-Na-Styrolsulfonat oder von Nylon-6 mit Acrylamid, Methacrylamid, Hydroxyethylacrylat, Hydroxyethylmethacrylat, Methacrylsäure oder Acrylsäure.

Daneben ist auch die durch $^{60}$Co-γ-Strahlung ausgelöste Pfropfung bekannt.

Die überwiegende Zahl der Veröffentlichungen über Lösungs-Diffusionsmembranen für die Pervaporation befaßt sich mit der Pfropfung nach der Simultanbestrahlungstechnik mit $^{60}$Co-γ-Strahlung, einer Methode, die zwar für den Labormaßstab geeignet ist, für eine Fertigung im technischen Maßstab wegen der schwierigen Handhabung (Polymerfilm und Pfropfmonomeres werden gleichzeitig bestrahlt) und langen Dauer der Pfropfreaktion jedoch ausscheidet. Darüberhinaus sind die Trennfaktoren der bekannten, durch strahlungsinduzierte Pfropfpolymerisation hergestellten Lösung-Diffusionsmembranen um etwa eine Größenordnung zu klein.

In Radiation Physics and Chemistry, 22, (3—5), Seiten 635 bis 642 (1983) ist die Herstellung von Membranen für die Pervaporation beschrieben, die durch strahlungsinduzierte Pfropfung von Monomeren auf Polymerfilme erhalten werden. Die Membranen liegen jedoch nicht in der Salzform vor.

In Journal of Applied Polymer Science 28 (4), Seiten 1465 bis 1479 (1983) sind ähnliche Membranen beschrieben, die zwar in der Salzform vorliegen. Eine Verwendung dieser Membranen für die Pervaporation ist jedoch nicht vorgesehen.

In GB—A—2 088 883 sind Kationenaustauschermembranen beschrieben, die durch strahlungsinduzierte Pfropfung eines Fluorvinylsulfonsäuremonomeren auf Polymerfilme erhalten werden. Eine Verwendung dieser Membranen für die Pervaporation ist nicht vorgesehen.

Aufgabe der Erfindung ist es nun, für die Pervaporation geeignete Lösungs-Diffusionsmembranen zur Verfügrung zu stellen, die gleichzeitig hohe Selektivität und Permeabilität für eine Komponente eines Gemisches, z.B. Wasser bei Lösungsmittel/Wasser-Gemischen, besitzen und nach einem technisch handhabbaren Verfahren hergestellt werden können.

Gegenstand der Erfindung ist somit die Verwendung von Lösungs-Diffusionsmembranen, hergestellt durch Schmelzextrusion oder Gießen aus synthetischen Polymeren, die einer Schmelztemperatur von über 140°C, eine Glasübergangstemperatur von über 0°C und Dauerbeständigkeit gegenüber siedendem Ethanol besitzen, Bestrahlen mit beschleunigten Elektronen und anschließende radikalische Pfropfpolymerisation mit Monomeren, die zu Salzbildung befähigte funktionelle Gruppen oder Gruppen, die leicht in zur Salzbildung befähigte Gruppen überführt werden können, enthalten, sowie nach der Pfropfpolymerisation Überführung der funktionellen Gruppen der Pfropfpolymeren in dissozierte Salse für Pervaporationsverfahren.

Das Verfahren zür Herstellung der Membranen ist für die Durchführung in technischem Maßstab geeignet. Die hiermit hergestellten Lösungs-Diffusionsmembranen sind hervorragend für die Pervaporation wasserhaltiger Gemische geeignet und besitzen gleichzeitig hohe Selektivität und Permeabilität für Wasser.

Beiden erfindungsgemäß Verwendeten Membranen finden synthetische Polymere Verwendung, die eine Schmelztemperatur $(F_p)$ von über 140°C, vorzugsweise über 180°C, und eine Glasübergangs-temperatur $(T_g)$ von über 0°C, vorzugsweise über 15°C und insbesondere 20°C oder darüber besitzen. Für den Fall, daß ein Polymeres zwei Glasübergänge aufweist, gilt die obere Glasübergangstemperatur (s. hierzu R. F. Boyer, J. Polym. Sci., Polym. Symp. 50 (1975) 189).

Geeignete Beispiele sind Polyvinylfluorid-(PVF)$(F_p \sim 185°C)$ $T_g \sim 45°C$), Polyvinylidenfluorid-(PVF$_2$)$(F_p \sim 170°C)$ $T_g \sim 20°C$), Poly(tetrafluorethylen-co-hexafluoropropen)-(PFEP)$(F_p \sim 260°C;$ $T_g \sim 80°C$) und Polyacrylnitril-(PAN)$(F_p \sim 317°C;$ $T_g \sim 85°C$).

In einer bevorzugten Ausführungsform werden Filme aus fluorhaltigen Polymeren verwendet, wobei Polyvinylfluorid wiederum eine Vorzugsstellung zukommt. Polyvinylfluorid besitzt eine gute Strahlenvernetzbarkeit, was für die Selektivität der Membran in bestimmen Fällen von Vorteil ist.

In einer weiteren bevorzugten Ausführungsform findet ein Film aus Polyacrylnitril Verwendung.

Dauerbeständigkeit gegenüber siedendem Ethanol bedeutet, daß die Polymerfilme beim Kochen in Ethanol für 10 Stunden oder darüber keine wesentliche Änderung erfahren und insbesondere auch formbeständig sind.

Bei den eingesetzten Polymerfilmen, die erst durch die strahleninduzierte Pfropfung Membraneigenschaften erhalten, handelt es sich um homogene, dichte schmelzextrudierte oder gegossene Filme mit Dicken von einigen μm bis 1 mm, vorzugsweise 5 bis 200 μm und insbesondere 10 bis 100 μm.

Der zu pfropfende Polymerfilm wird in einem schnellen Behandlungsschritt einer ionisierenden Strahlung mit beschleunigten Elektronen ausgesetzt und danach mit dem oder den Pfropfmonomeren in Berührung gebracht. Die Monomeren dringen von den Oberflächen her in den Film ein, wobei die durch die Bestrahlung im Polymerfilm erzeugten Radikale eine radikalische Polymerisation auslösen, die als Pfropfpolymerisation oder Pfropfung bezeichnet wird. Die beschriebenen Polymerfilme werden entweder in Luft

3

oder — vorzugsweise — in einer Inertgasatmosphäre mit einer $O_2$-Konzentration ≤100 ppm dem Strahlenfeld eines Elektronenbeschleunigers ausgesetzt. Um bei den vorzugsweise eingesetzten Filmdicken von 10 bis 100 µm eine möglichst gleichmäßige Radikalkonzentration im Film zu erzielen, wird vorzugsweise eine Elektronenenergie von E ≥150 keV angewendet.

Bei der Bestrahlung ist die Dosisleistung im allgemeinen ≥1 kGy s$^{-1}$, vorzugsweise 3 bis 50 kGy s$^{-1}$ (0,3 bis 5 Mrd s$^{-1}$), es können jedoch auch wesentliche höhere Dosisleistungen, z.B. 500 kGy s$^{-1}$, wie sie leistungsstarke Elktronenbeschleuniger bei großtechnischen Anwendungen hergeben, angewendet werden. Vorzugsweise beträgt die Dosisleistung 3 bis 20 kGy s$^{-1}$.

Die angewendete Strahlendosis beträgt im allgemeinen 10 bis 1000 kGy (1 bis 100 Mrd) vorzugsweise 20 bis 250 kGy.

In einder besonderen Ausführungsform wird durch Anwendung einer erhöhten Strahlendosis, z.B. 250 bis 400 kGy, eine erhöhte Vernetzung des Polymerfilms herbeigeführt. Hierdurch läßt sich in bestimmten Fällen eine bessere Selektivität erreichen.

Als Pfropfmonomere sind alle radikalisch polymerisierbaren Verbindungen einsetzbar, die eine oder mehrere zur Salzbildung befähigten Gruppen tragen oder Gruppen, die leicht in zur Salzbildung befähigte Gruppen überführt werden können (z.B. Ester). Beispiele für derartige Monomere sind Vinylsulfonsäure, Styrolsulfonsäure, 2-Acryloylamino-2-methyl-2-propan-sulfonsäure, Acrylsäure und deren Homologe, Methacrylsäure, Methacrylat, Methylmethacrylat, 2,3-Epoxypropylmethacrylat, Vinylimidazol, 2-Vinylpyridin und 4-Vinylpyridin. Bevorzugte Monomere sind Acrylsäure (AAc), Methacrylsäure (MAAc), Vinylimidazol (VIA), 4-Vinylpyridin (4-VPy) und 2-Vinylpyridin (2-VPy).

Die Pfropfmonomeren werden entweder in reiner Form oder in Lösung, z.B. Wasser oder Wasser/ Ethanol, vorzugsweise mit Monomerkonzentrationen von 20 bis 80 Gewichts-%, eingesetzt.

Der bestrahlte Polymerfilm wird im allgemeinen etwa 1 min nach Bestrahlungsende mit dem oder den Monomeren, die gegebenenfalls zuvor temperiert worden sind, in allseitigen Kontakt gebracht.

Die Pfropfpolymerisation erfolgt bei Temperaturen von vorzugsweise 30 bis 80°C, insbesondere 50 bis 70°C. Vorzugsweise werden die Bedingungen der Pfropfpolymerisation so lange aufrechterhalten, bis der Polymerfilm über die gesamte Dicke gepropft ist. Bei den erfindungsgemäß bevorzugten Polymer/ Monomer-Kombinationen und Verfahrensparametern läßt sich dies im allgemeinen in einem Zeitraum von 10 bis 60 min erreichen, wobei das gewünschte Ergebnis mit Hilfe der Differential-Interferenz-Kontrast-Mikroskopie an Dünnschnitten von Pobemembranen kontrolliert werden kann.

Der Pfropfgrad der so erhaltenen gepropften Polymerfilme liegt im allgemeine zwischen 20 und 300%. Zur Bestimmung des Pfropfgrades wird die Membran bis zur Gewichtskonstanz getrocknet und der Pfropfgrad (PG) nach der Formel

$$PG = \frac{P - P_O}{P_O} \times 100 \ (\%)$$

wobei P die Masse des gepropften Films und $P_O$ die Masse des ungepropften Films darstellen, bestimmt.

Der Sättigungspfropfgrad hängt von den Diffusions- und Polymerisationseigenschaften des Pfropfmonomeren sowie von verschiedenen Verfahrensparametern ab. Im allgemeinen nimmt der Sättigungspfropfgrad mit steigender Strahlendosis zu; bei Überschreitung einer gewissen Strahlendosis kann jedoch auch eine Abnahme des Sättigungspfropfgrades eintreten. Bei sehr hoher Strahlendosis kann es darüberhinaus zu einem Abbau des Filmpolymeren kommen, was bis zur Zerstörung gehen kann. Schließlich kann es bei bestimmten Filmpolymeren (z.B. PVF) zu Vernetzungsreaktionen aufgrund von Radikalkombinationen kommen.

Bei Temperaturerhöhung kann der Sättigungspfropfgrad entweder zunehmen oder abnehmen. Erhöhung der Monomerkonzentration bedingt im allgemeinen eine Zunahme des Sättigungspfropfgrades.

Aufgrund der Komplexität der Abhängigkeit des Sättigungspfropfgrades von den Diffusions- und Polymerisationseigenschaften des Pfropfmonomeren sowie von den Verfahrensbedingungen, und weil darüberhinaus nicht der Pfropfgrad sondern die Durchpfropfung des Polymerfilms das entscheidende Merkmal für die Membranqualität darstellt, wobei — Durchpfropfung unterstellt — der Pfropfgrad nach Maßgabe der Polymer-Monomer-Kombination und der Verfahrensbedingungen höchst unterschiedliche Werte annehmen kann, hat es sich als zeckmäßig erwiesen, den Eintritt der Durchpfropfung anhand der vorgenannten Differential-Interferenz-Kontrast-Mikroskopie empirisch zu bestimmten.

Nach beendeter Pfropfungsreaktion werden die funktionellen Gruppen des Pfropfpolymeren in dissoziierte Salze überführt. Vorzugsweise erfolgt jedoch vor der Salzbildung eine Extraktion der gepropften Polymerfilme mit Wasser oder Wasser/Ethanol zur Reinigung von Monomerresten oder von durch Übertragungsreaktion gebildetem Homopolymerisat (bzw. Copolymerisat bei Verwendung mehrerer verschiedener Pfropfmonomerer), das nicht durch Pfropfung an den Polymerfilm gebunden ist.

Zur Bildung dissoziierter Salze können im Fall von mit Acrylsäure, Methacrylsäure oder anderen Säuren gepropften Filmen durch Behandlung mit wässrigen oder alkoholischen (z.B. 80% Ethanol in Wasser) Lösungen starker Basen, wie Kalilauge oder Natronlauge, die Alkalisalze gebildet werden. Die Basenkonzentration beträgt hierbei z.B. 0,1 bis 10 Gewichts-%, vorzugsweise 1 bis 5 Gewichts-%. Die Salzbildung erfolgt hier im allgemeinen bei Temperaturen von 20 bis 80°C, vorzugsweise etwa 20°C, wobei Reaktionszeiten von 1 min bis 30 Studen, vorzugsweise 5 min bis 2,5 Stunden, angewendet werden. In manchen Fällen ist die Reaktionsdauer bis zur Erzielung einer maximalen Selektivität der Membran jedoch erheblich länger als der genannte bevorzugte Bereich (siehe Beispiel 2), ohne daß die genauen Ursachen hierfür bisher geklärt werden konnten.

Im Fall von mit Vinylimidazol oder Vinylpyridin gepfropften Filmen wird der gepfropfte Polymerfilm einer Quaternierung z.B. mit Methyljodid, Methylbromid oder Dimethylsulfat, unter Bildung der quartären Ammoniumsalze unter den bekannten Reaktionsbedigungen unterworfen. Anschließend erfolgt gegebenenfalls ein Austausch des Anions unter ähnlichen Bedingungen wie vorstehend für die Salzbildung aus Säuren beschrieben.

Im Fall von mit Acrylaten gepfropften Filmen wird der gepfropfte Polymerfilm unter ähnlichen Bedingungen, wie sie für die Salzbildung der Säuren angegeben sind, durch Behandlung mit Lösungen starker Basen, wie KOH oder NaOH, zunächst verseift und dabei gleichzeitig in das entsprechende Salz überführt.

In einer besonderen Ausführungsform wird in einer Vorstufe zur Elektronenbestrahlung mit anschließender Pfropfpolymerisation der Polymerfilm einer Vorbestrahlung mittels beschleunigter Elektronen mit anschließender Vorpfropfung unter Verwendung von hydrophilen Monomeren unterworfen. Hierdurch erreicht man die Bildung einer hydrophilen Comatrix, wodurch sich eine bessere Quellung und hierdurch wiederum höhere Pfropfgrade bei der nachfolgenden Pfropfpolymerisation erzielen lassen. Für die Durchführung dieser Vorstufe, d.h. Vorbestrahlung mit Vorpfropfung, können die gleichen Bedingungen wie für die beschriebene Bestrahlung und Pfropfung angewendet werden, lediglich die Pfropfmonomeren sind unterschiedlich. Geeignete Beispiele von für die Vorpfropfung geeignete Pfropfmonomeren sind N-Vinylpyrrolidon (NVP) oder N-Vinyl-N-methylacetamid (VIMA).

Die Beispiele erlaütern die Erfindung.

Bestimmung der Trenneigenschaften (Trennfaktor $\alpha$ im Standard-Pervaporationstest)

Die Trenneigenschaften der erfindungsgemäß hergestellten Membranen wurden an einem Pervaporations-Labormeßstand ermittelt. Der Zulauf, in allen Fällen eine 80/20 (Gew.-%)-EtOH/$H_2O$ Mischung, wurde mit etwa 70°C über die Membran gepumpt. Auf der Permeatseite wurde mit Hilfe einer Membranpumpe ein Unterdruck von <40 mbar erzeugt. Das Permeat wurde in Kühlfallen aufgefangen, gewogen und gaschromatographisch analysiert. Der Gesamtpermeatfluß $\emptyset$ 5 wurde in kg m$^{-2}$h$^{-1}$, und der Trennfaktor $\alpha$ gemäß der Formel

$$\alpha = \frac{c^P_{H_2O}}{c^Z_{H_2O}} \times \frac{c^Z_{EtOH}}{c^P_{EtOH}}$$

(mit C = Konzentration (Gew.%), = im Zulauf und P = im Permeat) berechnet.

Bestimmung der Eindringtiefe der Propfung in den Polymerfilm

Die Eindringtiefe der Propfung, insbesondere ob und unter welchen Bedingungen die Polymerfilme durchgepfropft sind oder werden, wurde mit Hilfe der Differential-Interferenz-Kontrast-Mikroskopie (DIKM) an Dünnschnitten von Probemembranen überprüft.

Beispiel 1

Ein schmelzextrudierte Polymerfilm aus Polyvinylfluorid (PVF) von 25 μm Dicke wird bei Raumtemperatur in $N_2$-Atmosphäre ($O_2$-Konzentration ≤100 ppm) mit 160-keV-Elektronen bei einer Dosisleistung $D_L$ = 9 kGys$^{-1}$ (0,9 Mrd s$^{-1}$) bis zu einer Gesamtdosis D = 26 kGy (2,6 Mrd) bestrahlt.

Etwa 1 min nach Bestrahlungsende wird der bestrahlte PVF-Film für 30 min in eine auf 70°C thermostatisierte Pfropfmonomerlösung aus 80%-iger Acrylsäure (AAc) in Wasser getaucht und über die gesamte Filmdicke gepfropft (überprüft mittels der vorgenannten DIKM-Methode). Danach wird der gepfropfte PVF-Film 16 h mit einem Gemisch aus Ethanol-Wasser unter Rückfluß extrahiert und 16 h bei 50°C unter reduziertem Druck getrocknet.

Der Pfropfgrad wird gravimetrisch zu PG = 223% bestimmt. Die Salzbildung erfolgt mit 5%-iger KOH in einer 80/20 (Gew.-%)-Ethanol/Wasser-Mischung bei 20°C und 30 min Reaktionsdauer. Im Standard-Pervaporationstest liefert die PVF-g-AAc-Membran (g = gepfropft mit) in Säureform 35% Ethanol im Permeat, entsprechend einem Trennfaktor $\alpha \sim 7$, bei einem Gesamtpermeatfluß $\emptyset \sim 0,6$ kg m$^{-2}$h$^{-1}$, während die entsprechende Salzform 3,6% Ethanol im Permeat, entsprechend $\alpha \sim 107$, bei einem Gesamtpermeatfluß $\emptyset$ 1,6 kg m$^{-2}$h$^{-1}$ liefert.

Beispiel 2

Gemäß Beispiel 1 wird ein PVF-Film mit AAc gepfropft, wobei jedoch die Strahlendosis D = 390 kGy beträgt und eine geringfügig geringerer Pfropfgrad PG = 206% resultiert. Im Standard-Pervaporationstest liefert diese PVF-g-AAc-Membran in Säureform 26% Ethanol im Permeat, entsprechend einem Trennfaktor $\alpha \sim 11$, bei einem Gesamtpermeatfluß $\emptyset \sim 0,7$ kg m$^{-2}$h$^{-1}$, während die entsprechende Salzform 1,5% Ethanol im Permeat, entsprechend $\alpha \sim 263$, bewi einem Gesamtpermeatfluß $\emptyset \sim 2,2$ kg m$^{-2}$h$^{-1}$ liefert.

Eine Verlängerung der Reaktionszeit zur Salzbildung auf 26 h verbessert bei dieser stark vorvernetzten PVF-g-AAc-Membran das Trennverhalten wesentlich: Im Standard-Pervaporationstest liefert die derart behandelte Pfropfmembran (Salzform) $\sim 0,7\%$ Ethanol in Permeat, entsprechend $\alpha \sim 567$, bei einem Gesamtpermeatfluß $\emptyset \sim 1,9$ kg m$^{-2}$h$^{-1}$.

Beispiel 3, Vorpfropfung mit hydrophilen Monomeren

Ein schmelzextrudierter Polymerfilm aus Polyvinylfluorid (PVF) von 25 µm Dicke wird bei Raumtemperatur in N$_2$-Atmosphäre (O$_2$-Konzentration $\leq$100 ppm) mit 160-keV-Elektronen bei einer Dosisleistung D$_L$ = 3 kGy s$^{-1}$ (0,3 Mrd s$^{-1}$) bis zu einer Gesamtdosis D = 51 kGy (5,1 Mrd) vorbestrahlt. Etwa 1 min nach Bestrahlungsende wird dieser vorbestrahlte PVF-Film für 10 min in ein auf 70°C thermostatisiertes Pfropfmonomerbad aus 100%-igem N-Vinyl-N-methylacetamid (VIMA) getaucht und über die gesamte Filmdicke vorgepfropft (überprüft mittels DIK-Mikroskopie). Danach wird der gepfropfte PVF-Film 16 h mit einem Gemisch aus Ethanol/Wasser unter Rückfluß extrahiert und für 16 h bei 50°C unter reduziertem Druck getrocknet.

Der Pfropfgrad wird gravimetrisch zu PG = 60% bestimmt. Dann wird dieser mit VIMA vorgepfropfte PVF-Film bei Raumtemperatur in N$_2$-Atmosphäre (P$_2$-Konzentration $\leq$100 ppm) mit 160-keV-Elektronen bei einer Dosisleistung D$_L$ = 12 kGy s$^{-1}$ bis zu einer Gesamtdosis D = 98 kGy bestrahlt.

Etwa 1 min nach Bestrahlungsende wird der vorgepfropfte bestrahlte PVF-g-VIMA-Film für 60 min in eine auf 70°C thermostatisierte Pfropfmonomerlösung aus 80%-iger AAc in H$_2$O getaucht und ein zweites Mal über die gesamte Filmdicke gepfropft (überprüft mittels DIK-Mikroskopie). Danach wird der nun doppelt gepfropfte PVF-Film der gleichen Extraktions- und Trocknungsprozedur unterworfen wie zuvor.

Der im zweiten Pfropfschritt erzielte Pfropfgrad wird gravimetrisch zu PG = 267% (bezogen auf PVF-g-VIMA) bestimmt.

Die Salzbildung erfolgt wie in Beispiel 1 beschrieben, jedoch bei 60 min Reaktionsdauer.

Im Standard-Pervaporationstest liefert diese doppelt gepfropfte Membran, PVF-g-VIMA-g-AAc, in der Säureform 31% Ethanol im Permeat, entsprechend einem Trennfaktor $\alpha \sim 9$, bei einem Gesamtpermeatfluß $\emptyset \sim 0,7$ kg m$^{-2}$h$^{-1}$, während die entsprechende Salzform 2,7% Ethanol im Permeat, entsprechend $\alpha \sim 144$ bei einem Gesamtpermeatfluß $\emptyset \sim 4,7$ kg m$^{-2}$h$^{-1}$ liefert.

Beispiel 4

Ein schmelzextrudierter Polymerfilm aus Polyvinylidenfluorid (PVF$_2$) von 22 µm Dicke, wird bei Raumtemperatur in N$_2$-Atmosphäre (O$_2$-Konzentration $\leq$100 ppm) mit 160-keV-Elektronen bei einer Dosisleistung D$_L$ = 9 kGy s$^{-1}$ bis zu einer Gesamtdosis D = 53 kGy bestrahlt.

Etwa 1 min nach Bestrahlungsende wird der bestrahlte PVF$_2$-Film für 60 min in eine auf 60°C thermostatisierte Pfropfmonomerlösung aus 50%-igem Vinylimidazol (VIA) in Wasser getaucht und über die gesamte Filmdicke gepfropft (überprüft mittels DIK-Microskopie). Danach wird der gepfropfte PVF$_2$-Film unter gleichen Bedingungen wie in Beispiel 1 extrahiert und getrocknet.

Der Pfropfgrad wird gravimetrisch zu PG = 23% bestimmt. Die Quaternierung erfolgt mit 5%-igem CH$_3$I in einer 95/5(Gew.-%)-Ethanol/Wasser/Mischung bei 70°C und 30 min Reaktionsdauer. Im Standard-Pervaporationstest liefert diese PVF$_2$-g-VIA-Membran in der Ausgangsform 23% Ethanol im Permeat, entsprechend einem Trennfaktor $\alpha \sim 13$, bei einem Gesamtpermeatfluß $\emptyset \sim 0,4$ kg m$^{-2}$h$^{-1}$, während die entsprechende quarternierte Form 5,9% Ethanol im Permeat, entsprechend $\alpha \sim 64$, bei einem Gesamtpermeatfluß $\emptyset \sim 0,8$ kg m$^{-2}$h$^{-1}$ liefert.

Beispiel 5

Ein schmelzextrudierter Polymerfilm aus Polyvinylidenfluorid (PVF$_2$) von 22 µm Dicke, wird bei Raumtemperatur in N$_2$-Atmosphäre (O$_2$-Konzentration $\leq$90 ppm) mit 160-keV-Elektronen bei einer Dosisleistung D$_L$ = 11 kGy s$^{-1}$ bis zu einer Gesamtdosis D = 20 kGy bestrahlt.

Etwa min nach Bestrahlungsende wird der bestrahlte PVF$_2$-Film für 45 min in ein auf 70°C thermostatisiertes Pfropfmonomerbad aus 100%-igem 4-Vinylpyridin getaucht und über die gesamte Filmdicke gepfropft (überprüft mittels DIK-Mikroskopie). Danach wird der gepfropfte PVF$_2$-Film unter gleichen Bedingungen wie in Beispiel extrahiert und getrocknet. Der Pfropfgrad wird gravimetrisch zu PG = 40% bestimmt.

Die Quaternierung erfolgt gemäß Beispiel 4.

Im Standard-Pervaporationstest liefert diese PVF$_2$-g-VPy-Membran in der Ausgangsform 34% Ethanol im Permeat, entsprechend einem Trennfaktor $\alpha \sim 8$, bewi einem Gesamtpermeatfluß $\emptyset \sim 0,7$ kg m$^{-2}$h$^{-1}$, während die entsprechende quarternierte Form 4% Ethanol im Permeat, entsprechend $\alpha \sim 96$, bei einem Gesamtpermeatfluß $\emptyset \sim 2,2$ kg m$^{-2}$h$^{-1}$ liefert.

Beispiel 6

Ein schmelzextrudierter Polymerfilm aus Poly(tetrafluorethylen-co-hexafluoropropen) (PFEP) von 25 µm Dicke, wird bei Raumtemperatur in $N_2$-Atmosphäre ($O_2$-Konzentration $\leq$100 ppm) mit 160-keV-Elektronen bei einer Dosisleistung $D_L$ = 9 kGy s$^{-1}$ bis zu einer Gesamtdosis D = 97 kGy bestrahlt.

Etwa 1 min nach Bestrahlungsende wird der bestrahlte PFEP-Film für 60 min in eine auf 60°C thermostatisierte Pfropfmonomerlösung aus 30%-iger Acrylsäure in Wasser getaucht und über die gesamte Filmdicke gepfropft (überprüft mittels DIK-Mikroskopie). Danach wird der gepfropfte PFEP-Film 15 h in Wasser unter Rückfluß extrahiert und 16 h bei 60°C unter reduziertem Druck getrocknet.

Der Pfropfgrad wird gravimetrisch zu PG = 30% bestimmt.

Die Salzbildung erfolgt mit 5%-iger KOH in einer 80/20 (Gew.-%)-Ethanol/Wasser/Mischung bei 25°C und 2,5 h Reaktionsdauer.

Im Standard-Pervaporationstest liefert diese PFEP-g-AAc-Membran in der Säureform 40% Ethanol im Permeat, entsprechend einem Trennfaktor α ~ 6, bei einem Gesamtpermeatfluß ∅~ 0,5 kg m$^{-2}$h$^{-1}$, während die entsprechende Salzform 0,5% Ethanol im Permeat, entsprechend α ~ 796, bei einem Gesamtpermeatfluß ∅~ 1,8 kg m$^{-2}$h$^{-1}$ liefert.

Beispiel 7

Ein Gießfilm aus Polyacrylnitril (PAN — 12%-ige Lösung in Dimethylformamid), 25 µm dick, wird bei Raumtemperatur in $N_2$-Atmosphäre ($O_2$-Konzentration $\leq$100 ppm) mit 160-keV-Elektronen bei einer Dosisleistung $D_L$ = 11 kGy s$^{-1}$ bis zu einer Gesamtdosis D = 33 kGy bestrahlt.

Etwa 1 min nach Bestrahlungsende wird der bestrahlte PAN-Film für 40 min in eine auf 60°C thermostatisierte Pfropfmonomerlösung aus 50%-iger Acrylsäure in Wasser getaucht und über die gesamte Filmdicke gepfropft (überprüft mittels DIK-Mikroskopie). Danach wird der gepfropfte PAN-Film unter gleichen Bedingungen wie in Beispiel 6 extrahiert und getrocknet.

Der Pfropfgrad wird gravimetrisch zu PG = 127% bestimmt.

Die Salzbildung erfolgt wie in Beispiel 6.

Im Standard-Pervaporationstest liefert diese PAN-g-AAc-Membran in der Säureform 33% Ethanol im Permeat, entsprechend einem Trennfaktor α ~ 8, bei einem Gesamtpermeatfluß ∅~ 1,8 kg m$^{-2}$h$^{-1}$, während die entsprechende Salzform ~ 0,4% Ethanol in Permeat, entsprechend α ~ 996, bei einem Gesamtpermeatfluß ∅~ 1,7 kg m$^{-2}$h$^{-1}$ leifert.

**Patentansprüche**

1. Verwendung von Lösungs-Diffusionsmembranen, hergestellt durch Schmelzextrusion oder Gießen aus synthetischen Polymeren, die eine Schmelztemperatur von über 140°C, eine Glasübergangstemperatur von über 0°C und Dauerbeständigkeit gegenüber siedendem Ethanol besitzen, Bestrahlen mit beschleunigten Elektron und anschließende radikalische Pfropfpolymerisation mit Momomeren, die zur Salzbildung befähigte funktionelle Gruppen oder Gruppen, die leicht in zur Salzbildung befähigte Gruppen überführt werden können, enthalten, sowie nach der Pfropfpolymerisation Überführung der funktionellen Gruppen der Pfropfpolymeren in dissoziierte Salze, für Pervaporationsverfahren.

2. Verwendung nach Anspruch 1, dadurch gekennzeichnet, daß Filme aus synthetischen Polymeren mit einer Glasübergangstemperatur von über 15°C eingestzt worden sind.

3. Verwendung nach Anspruch 1 oder 2, dadurch gekennzeichnet, daß Filme aus fluorhaltigen Polymeren eingesetzt worden sind.

4. Verwendung nach Anspruch 3, dadurch gekennzeichnet, daß Polyvinylfluorid als fluorhaltiges Polymeres eingesetzt worden ist.

5. Verwendung nach Anspruch 1 oder 2, dadurch gekennzeichnet, daß Filme aus Polyacrylnitril eingesetzt worden sind.

6. Verwendung nach einem der vorhergehenden Ansprüche, dadurch gekennzeichnet, daß Filme mit einer Dicke von 10 bis 100 µm eingesetzt worden sind.

7. Verwendung nach einem der vorhergehenden Ansprüche, dadurch gekennzeichnet, daß die Bestrahlung mit einer Dosisleistung von 3 bis 50 kGy s$^{-1}$ durchgeführt worden ist.

8. Verwendung nach einem der vorhergehenden Ansprüche, dadurch gekennzeichnet, daß bei der Bestrahlung eine Strahlendosis von 20 bis 250 kGY angewendet worden ist.

9. Verwendung nach einem der Ansprüche 1 bis 7, dadurch gekennzeichnet, daß durch Erhöhung der Strahlendosis auf 250 bis 400 kGy bei der Elektronenbestrahlung eine erhöhte Vernetzung des Polymerfilms herbeigeführt worden ist.

10. Verwendung nach einem der Ansprüche 1 bis 9, dadurch gekennzeichnet, daß zur Vorbehandlung der Elektronenbestrahlung mit anschließender Pfropfpolymerisation der Polymerfilm einer Vorbestrahlung mittels beschleunigter Elektron mit anschließender Vorpfropfung unter Verwendung von hydrophilen Monomeren unterworfen worden ist.

11. Verwendung nach einem der vorhergehenden Ansprüche, dadurch gekennzeichnet, daß die Bedingungen der Pfropfpolymerisation so lange aufrechterhalten worden sind, daß der Polymerfilm über die gesamte Dicke gepfropft ist.

12. Verwendung nach einem der vorhergehenden Ansprüche, dadurch gekennzeichnet, daß die

7

## EP 0 221 171 B1

Pfropfpolymerisation bei Temperaturen von 50 bis 70°C durchgeführt worden ist.

13. Verwendung nach einem der vorhergehenden Ansprüche, dadurch gekennzeichnet, daß der gepfropfte Polymerfilm vor der Salzbildung einer Extraktion mit Wasser oder Wasser/Ethanol unterworfen worden ist.

**Revendications**

1. Utilisation, dans un procédé de pervaporation, de membranes de diffusion de solutions, fabriquées par extrusion ou coulée à l'état fondu de polymères synthétiques possédant une température de fusion supérieure à 140°C, une température de transition vitreuse supérieure à 0°C et une bonne stabilité dans l'éthanol bouillant, irradiation avec des électrons accélérés puis polymérisation radicalaire par greffage avec des monomères renfermant des groupes fonctionnels salifiables ou des groupes facilement transformables en groupes salifiables, ainsi que transformation, après polymérisation par greffage, desdits groupes fonctionnels des polymères greffés en sels dissociés.

2. Utilisation selon la revendication 1, caractérisée en ce que l'on met en oeuvre des films de polymères synthétiques ayant une température de transition vitreuse supérieure à 15°C.

3. Utilisation selon la revendication 1 ou 2, caractérisée en ce que l'on met en oeuvre des films en polymères fluorés.

4. Utilisation selon la revendication 3, caractérisée en ce que l'on met en oeuvre du poly(fluorure de vinyle) comme polymère fluoré.

5. Utilisation selon la revendication 1 ou 2, caractérisée en ce que l'on met en oeuvre des films en polyacrylonitrile.

6. Utilisation selon l'une des revendications précédentes, caractérisée en ce que l'on met en oeuvre des films d'une épaisseur comprise entre 10 et 100 μm.

7. Utilisation selon l'une des revendications précédentes, caractérisée en ce que l'on réalise l'irradiation avec un débit de dose de 3 à 50 kGy s$^{-1}$.

8. Utilisation selon l'une des revendications précédentes, caractérisée en ce que l'on réalise l'irradiation avec une dose de 20 à 250 kGy.

9. Utilisation selon l'une des revendications 1 à 7, caractérisée en ce que l'on augmente le degré de réticulation du film de polymère par augmentation, lors de l'irradiation, de la dose d'irradiation de 250 à 400 kGy.

10. Utilisation selon l'une des revendications 1 à 9, caractérisée en ce que, pour le prétraitement par irradiation électronique suivie de polymérisation greffée, on soumet le film polymère à une pré-irradiation à l'aide d'électrons accélérés suivie d'un prégreffage avec des monomères hydrophiles.

11. Utilisation selon l'une des revendications précédentes, caractérisée en ce que l'on maintient les conditions de la polymérisation greffée aussi longtemps qu'il le faut pour greffer le polymère sur toute son épaisseur.

12. Utilisation selon l'une des revendications précédentes, caractérisée en ce que l'on réalise la polymérisation greffée à des températures comprises entre 50 et 70°C.

13. Utilisation selon l'une des revendications précédentes, caractérisée en ce que l'on soumet, avant la salification, le film de polymère greffé à une extraction avec de l'eau ou un mélange eau/éthanol.

**Claims**

1. Use of solution diffusion membranes, manufactured by melt extrusion or moulding of synthetic polymers which have a melting temperature of above 140°C, a glass transition temperature of above 0°C and continuous resistance to boiling ethanol, irradiation with accelerated electrons and subsequent radical graft polymerisation with monomers which contain functional groups capable of salt formation or groups which can be easily converted into groups capable of salt formation, and, after the graft polymerisation, conversion of the functional groups of the graft polymers into dissociated salts, for pervaporation processes.

2. Use as claimed in claim 1, characterised in that films of synthetic polymers with a glass transition temperature of above 15°C have been used.

3. Use as claimed in claim 1 or 2, characterised in that films of fluorine-containing polymers have been used.

4. Use as claimed in claim 3, characterised in that polyvinylfluoride has been used as the fluorine-containing polymer.

5. Use as claimed in claim 1 or 2, characterised in that films of polyacrylonitrile have been used.

6. Use as claimed in one of the preceding claims, characterised in that films with a thickness of 10 to 100 microns have been used.

7. Use as claimed in one of the preceding claims, characterised in that the irradiation has been carried out with a dosage power of 3 to 50 kGy s$^{-1}$.

8. Use as claimed in one of the preceding claims, characterised in that irradiation dosage of 20 to 250 kGy has been used in the irradiation.

8

9. Use as claimed in one of claims 1 to 7, characterised in that an increased cross-linking of the polymer film has been caused by increasing the radiation dosage to 250 to 400 kGy in the electron irradiation.

10. Use as claimed in one of claims 1 to 9, characterised in that as a pretreatment of electron irradiation with subsequent graft polymerisation the polymer film is subjected to a preliminary irradiation by means of accelerated electrons with subsequent preliminary grafting using hydrophilic monomers.

11. Use as claimed in one of the preceding claims, characterised in that the conditions of the graft polymerisation are maintained until the polymer film is grafted over its entire thickness.

12. Use as claimed in one of the preceding claims, characterised in that the graft polymerisation has been conducted at temperatures of 50 to 70°C.

13. Use as claimed in one of the preceding claims, characterised in that the grafted polymer film has been subjected to an extraction with water or water/ethanol prior to the salt formation.